# EUROPEAN PATENT SPECIFICATION

(11) **EP 4 049 942 B1**
(45) Date of publication and mention of the grant of the patent: **17.01.2024**
(21) Application number: 21159189.6
(22) Date of filing: 25.02.2021
(51) Int. Cl.: B65D 71/00

(54) **TOP COVER AND PACKAGE SYSTEM**
ABDECKUNG UND VERPACKUNGSSYSTEM
COUVERCLE SUPÉRIEUR ET SYSTÈME DE CONDITIONNEMENT

(43) Date of publication of application: 31.08.2022
(73) Proprietor: Cartonplast Group GmbH, 63128 Dietzenbach (DE)
(72) Inventor: Koray, Serkan, 60323 Frankfurt (DE); Weikl, Harald, 63877 Sailauf (DE)
(74) Representative: Müller Schupfner & Partner Patent- und Rechtsanwaltspartnerschaft mbB

(56) References cited:
- WO-A1-99/06299
- FR-A1- 2 515 140
- FR-A1- 2 748 458
- US-A- 4 141 447
- US-A1- 2003 143 374
- US-A1- 2008 035 517
- US-A1- 2016 001 947
- US-A1- 2018 222 648
- US-B1- 10 494 162

## Description

The present invention relates to a top cover and a package system comprising said top cover.

Articles like bottles or jars are often transported in stacks on pallets. Normally, the articles are arranged in layers on the pallet. Between the layers of articles an intermediate layer (i.e. a so-called layer pad) is disposed. Accordingly, the upper layer of articles stabilizes the layer of articles below. However, the topmost layer of articles cannot be stabilized by a further layer of articles. Therefore, the topmost layer of articles is normally covered by a specific cover sheet (also known as top cover or top cap) to stabilize it. Such a a top cover is disclosed in document US2016/001947A1.

However, the known cover sheets do not always stabilize the layer of articles satisfactorily. In particular, when the pallet is processed and thus moved, the known sheets may shift with respect to the layer of articles and, thus, do not cover all of the articles in the topmost layer of articles. As a result, the sheet cannot properly stabilize the upper layer of articles. In addition, vibrations may be caused by the moving process and might provoke that articles fall off the layer. If the top cover does not sufficiently cover the topmost layer, a step of wrapping a foil around the stack can destabilize the topmost layer of articles. This can result in the articles falling off when the foil is removed. If the stack is exposed to different or varying temperatures, the intermediate layers may deform and the layer of articles may be destabilized. Further, the articles may have different heights which may be caused by different moulds used to manufacture the articles and/or by a deformation of a layer pad on which the articles are positioned. In addition, there are top covers made from cardboard and designed to be used only once. However, it would be advantageous to provide a top cover that not only sufficiently stabilizes the topmost layer of articles, but that is also reusable and easy to transport.

Therefore, it is an object of the present invention to provide a top cover for covering a layer of articles that stabilizes the topmost layer of articles and a package system that is reusable and easy to transport.

The present invention solves the problem by providing a top cover having the features of claim 1 and a package system having the features of claim 15.

For an intended use, the top cover may be placed on top of a layer of articles (e.g. on a topmost layer of articles) such that the main body comes in contact with the articles of the layer. Plate-like shape may mean that the main body has a small thickness as compared to the length of its edges. The main body may have a first surface facing the articles of the layer of articles, during the intended use, and a second surface which is opposite to the first surface. Therefore, the first surface may be referred to as a bottom surface of the main body. In addition, the second surface, may be referred to as the top surface of the main body. A direction extending from the first surface to the second surface may be referred to as the thickness direction. That is, the main body may be configured so as to provide a contact between the main body and the articles. Therefore, the main body may be substantially flat, in particular, the first surface may be substantially flat. The contact between the main body and the articles provides a frictional connection between the articles and the top cover. Therefore, the articles are prevented from falling off the layer. For example, the main body may be flexible so as to provide contact with each article of the layer even if the articles do not have exactly the same height. As a result, the main body may hold the articles by frictional contact even if the articles may have different sizes and/or are placed on an uneven base (e.g. on a layer pad).

In order to provide a sufficient flexibility, the main body may be made of a thermoplastic material. For example, the main body may be made of Polypropylene, Polyethylene or a Thermoplastic elastomer. In particular, the material may have an E-module of between 200 to 1800 N/mm². It was found that in the above range of the E-module, the flexibility of the main body is sufficient so as to adapt the main body to different heights of articles so as to come in contact with the articles of the layer, while at the same time the main body is rigid enough to be smoothly used in an automated process. Preferably, the E-module of the material is between 1300 to 1800 N/mm². In this range a high durability of the top cover is ensured. Moreover, the top cover may be easily recyclable.

In addition, the top cover may be made of a material that is physiologically harmless and biologically inert. As a result, the top cover may be also used in the food industry. Further, the material may have a density of between 0,895 g/cm³ to 0,92 g/cm³. This range of density provides the best resistance against inadvertent deformation of the main body, while at the same time a low grammage of the main body is secured. For example, the top cover may have a coating in order to provide physiologically harmless and biologically inert properties. The coating may comprise nanoparticles. Any coating may be used that provides physiologically harmless and biologically inert properties. Preferably, the friction between the layer pad and the articles is not significantly reduced.

The main body may be sized so as to have essentially the same outer contour as the layer pad and/or a pallet on which the articles are provided and which is used for transporting of the articles. The main body may have a rectangular shape such that the main body may have one edge longer than the other edge. Preferably, in a top view, the main body may have a size of 800 mm x 1000 mm (Euro-Size), 1000 mm x 1200 mm (industry size) or 1120 mm x 1420 mm (CAN size). Accordingly, the top cover may have the same size as a layer pad used as intermediate layer between layers of articles. However, the main body may also have an individual sizes for customized package formats. In the following, the direction in which the longer edges of the main body extend is referred to as the depth direction and the direction in which the shorter edges of the main body extend is referred to as the width direction.

In addition to the above outlined frictional connection between the main body and the articles, the top cover additionally holds the articles by providing the at least one flap. Therefore, the flap is arranged at the main body so as to hold the articles in place. The flap may hold the articles in a positive locking manner. That is, the flap prevents the articles from falling off the layer. In other words, the top cover of the present invention holds the articles in place by both the main body (frictional contact) and by the at least one flap (positive locking). The at least one flap may be a stripe element which may have a substantially rectangular shape in cross section. Accordingly, the flap may have a length and a width, wherein the length may be longer than the width, preferably, at least 40 times longer than the with. Accordingly, an appropriate holding function can be exhibited by the flap while at the same time the flap is compact and easily stowable.

The at least one flap may be provided at the first side of the main body. Especially, the flap is mounted to the main body via the mounting portion. That is, the flap protrudes from the main body in the thickness direction, in the holding position. The at least one flap is provided at a marginal region of the main body. That is, the at least one flap may be provided near to at least one of the edges of the main body. Further, the at least one flap may be only provided at the outer perimeter (i.e. marginal region) of the main body. Accordingly, the capacity of the layer covered by the cover element is not lowered or declined by providing the flap. Preferably, at least one flap may be provided at each edge of the main body. For example, if the main body has a rectangular shape, the top cover has four edges and thus may have four flaps. Accordingly, the articles may be securely held in position by the flaps all around. Further, the top cover may be symmetrical with respect to the depth direction and/or width direction. Moreover, the at least one flap and the main body may be formed as an integral element.

In the following, one flap is described in detail that may be dedicated to a longer edge of a rectangular main body, however, the same is analogously applicable for each further flap that may be provided at the main body (i.e. at another edge of the main body). In this case, the flap may extend along the longer edge of the main body i.e. along the depth direction. Specifically, the flap may have a constant distance from the edge, wherein in this case same distance is considered to include manufacturing tolerances of at the most of 2%. Preferably, the flap may be additionally or exclusively provided in the corner sections of the top cover. It was found that in this case, the probability of articles falling off the layer is significantly reduced, because articles in the corner section of the layer of articles tend to fall out the most. Therefore, an optimal efficiency between material usage and obtained result may be provided. The flap extension along an edge of the main body may be at least 80%, most preferably at least 90%, of the edge extension in the same direction. In this case almost no article may fall off the topmost layer. Accordingly, an improved process stability may be attained which is in particular advantageously if the stack of articles is automatically processed. Further, in a cross section defined by the thickness direction and the width direction, the flap may have a rod-like shape in a cross section. This provides the effect that the flap is easily stowable in the retracted position. Preferably, the flap has the shape of arc bend in the thickness direction away from the main body. In this case, the articles may be favorable stabilized by the flap because due to the bending of the flap, the flap may apply a pushing force to the articles. In addition, the arc shaped flap may have the effect that the flap has a flexibility or elasticity so as to secure the articles from being damaged. That is, the flap may have cushioning properties so as to protect the articles from being damaged. Alternatively, the flap may have a Z-form or zig-zag shape in said cross section. This shape of the flap is advantageously if the articles have a high weight, because the flap having the above shape is hardly displaceable and may thus securely hold the articles. In any case, the flap has a main extension direction which, in the holding position, extends away from the main body. That is, the main extension direction may be defined by a virtual line in a cross section defined by the thickness direction and the width direction between a point defined by a two-dimensional mean value of equidistant distributed points on the flap and the mounting portion. Providing the main extension direction of the flap in an angle smaller than 90° with respect to the main body provides the effect that the articles are securely held by the flap even if the layer is shaken. In more detail, if the flap is inclined inwards (i.e. towards the center of the main body) the force that could be absorbed by the flap without being deviated is increased. That is, the top cover can hold the articles in place even if the stack of articles is shaken while being processed.

In addition, the top cover may be transformed from the holding position to the retracted position. In the holding position the flap may be reeled-out so as to hold the articles in place. In other words, the tip end of the flap may be displaced away from the main body (i.e. spaced apart from the main body). On the other hand, in the retracted position, the flap may be retracted so as to be positioned close to the main body. That is, in the retracted position, the top cover may have an extension in the thickness direction that is smaller than three times the thickness of the main body in the thickness direction, preferably smaller or equal than two times the thickness of the main body in the thickness direction. Accordingly, the top cover may be compact and easy to transport in the retracted position. The top cover may be transferred from the holding position to the retracted position by stacking the top cover onto a plane (e.g. onto another top cover). That is, due to the inclined flap, the flap may be automatically folded towards the inside (i.e. towards the center of the main body) such that the top cover is easily stackable in space-saving manner. That is, in the retracted position, the top cover may have a substantially plane-like shape. As a result, a plurality of top covers may be easily stackable. Further, the top cover may be stackable with layer pads. Accordingly, the top cover according to the present invention may be designed as a reusable top cover because it may be easily transferred back from a destination of the articles to a producer of the articles so as to be used again. This improves the efficiency of the top cover and the environmental acceptability.

The top cover may be transformed from the retracted position to the holding position by lifting the top cover up. Then, the flap may automatically move so as to displace the tip end of the flap away from the main body. In other words, the tip end of the flap may be spaced apart from the main body so as to be not directly in contact with the main body. Therefore, the holding position may be easily quickly provided.

The tip end of the flap may be defined by a radius that is at least half time the thickness of the main body in the thickness direction. In other words, the flap may have the same thickness as the main body. In this case the optimal flexibility of the main body and the flap is achieved so as to provide both the frictional contact between the main body and the articles and the positive locking of the articles. Hence, a top cover may be provided having an increased effectiveness in holding the articles. Further, by having a rounded shape, it may be avoided that any of the articles to be covered by the top cover may be damaged. In addition, the production may be facilitated.

The mounting portion may be a part of the flap at which the flap is connected to the main body. The mounting portion may be formed by a hinge (e.g. a film hinge). Accordingly, the movement of the flap (i.e. the displacement of the tip end) may be accurately defined by the configuration of the hinge. Alternatively, the flap may be attached to the main body at the mounting portion, by gluing or welding, for example. In this case the movement of the flap may be realized by a flexible material of which the flap is made of. Accordingly, the configuration of the flap is simplified and less prone for defects. In addition, the durability of the whole top cover may be increased. Preferably, the mounting portion is provided at an end portion of the flap opposite to the tip end thereof. That is, the tip end may form a distal end of the flap and the mounting portion may form a proximal end of the flap. As a result, the flap may be completely provided at one side of the main body (i.e. at the first surface of the main body). Therefore, the other surface of the main body (i.e. the second surface) may be available for placing other items thereon (e.g. a further pallet of articles). Alternatively, the mounting portion may be provided between the tip end and the opposite end of the flap. In this case a part of the flap may extend beyond a plane which is defined by the main body, towards the second surface. In this case, the part of the flap that extends beyond said plane may act as a balance weight so as to urge the flap from the holding position towards the retracted position. In addition, during the intended use, the tip end may be pressed against the articles forming the topmost layer and therefore may support the tip end in holding the articles in place.

In addition, there may be provided a plurality of flaps at each edge of the main body. That is, each flap may be separated from an adjacent flap so as to form a kind of curtain formed by a plurality of individual flaps, in the holding position. Each of the flaps may have the same extension in the depth direction. Preferably, between each flap a gap is formed that has the same extension in the depth direction as the extension of the flap adjacent thereto. Accordingly, each flap may be individually bend and/or displaced. That is, if large articles like jars are to be transported, some of the flaps may be pushed towards the main body when the top cover is placed on the articles. However, due to the possibility to individually deform each flap, only some flaps may be pushed towards the main body (i.e. towards the retracted position), while the other flaps are still in the holding position so as to hold the articles in place. Accordingly, the field of application of the top cover may be increased.

The flap is configured such that the tip end is displaceable between the retracted position and the holding position by gravity.

That is, there may not be an additional operation by an operator necessary to displace the tip end from the retracted position to the holding position. For example, the top cover may be grasped by a suction device and lifted up. Then, the at least one flap may be automatically displaced such that the top cover is in the holding position. Accordingly, the top cover may be placed onto a layer of articles. That is, the top cover may be easily implemented in existing processing lines without the need for any additional working steps. As described above, the flap may be moveable due to a hinge or due to material properties. In particular, the flap may include a material thinning between the mounting portion and the tip end. Preferably, the material thickness of the material thinning is smaller than ¾, preferably smaller than ½, of the mean material thickness of the flap. In the first range, the displacement of the tip end of the flap is secured in an appropriate time span. In the second range, the displacement of the tip end of the flap is secured in even under varying environmental conditions like temperature. That is, during an automatic processing line, the top cover is transformed from the retracted position to the holding potion fast enough so as to not slow down the processing speed.

Preferably, the flap is configured such that an angle between the main extension direction and the main body in the holding position is smaller than 80°, preferably, smaller than 75°.

Providing the above range, ensures that the top cover may be readily transformed from the holding position to the retracted position if the top cover is placed onto a plane. At the same time, it is ensured that the articles are properly held in position without being inadvertently pushed by the flap. That is, it was found that an angle smaller than 75° is the best balance between an improved processability of the top cover and the holding properties of the top cover. Due to the flexibility of the flap, the flap may be bend further away from the center of the main body such that the main extension direction is inclined more than the above defined range. This may be caused by articles that have a dimension and shape such that the flap is further elastically deformed. However, the flap may be only elastically deviated or deformed such that the flap automatically returns to a position in which the angle between the main extension direction and the main body is smaller than 90° once the top cover is removed from the layer of articles. This maximum bending angle may be maintained by providing appropriate material properties of the flap (e.g. elastic limit of the flap) or by a mechanical stop (e.g. in case a hinge is implemented). Accordingly, the top cover may be readily transformed form the holding position to the retracted position once the top cover is removed from the articles and is placed on a plane.

Preferably, a plurality of holes is provided in the flap.

The top cover according the present invention may be reusable. Therefore, there may be a cleaning process necessary after a usage of the top cover. The cleaning process may include a step of washing the top cover. The holes may have the effect that the water used during the washing process may be easily discharged and the top cover may be quickly dried so as to be useable again. In addition, the holes may reduce the weight of the flap and thus of the whole top cover. Therefore, even fragile articles may be covered with the top cover without being damaged.

Preferably, the top cover may further comprise a receptacle so as to accommodate the flap in the retracted position.

The receptacle may comprise a receptacle body formed as a plate like element. The receptacle may be provided at the main body (e.g. at the first surface). The receptacle body may include a recess or a void volume which is sized such that at least a part of the flap may be accommodated therein in the retracted position. The receptacle body may be arranged or arrangeable at the first surface of the main body so as to partly or completely cover the first surface. Accordingly, in the retracted position, the flap and the receptacle (in particular the receptacle body) may form a flush surface such that the top cover may be easily stackable in the retracted position. Preferably the receptacle is provided at the first side of the main body. In some embodiments, the receptacle and the flap may be formed as an integral member. In this case, the flap may be a part of the receptacle. For example, the flap may be separable from the receptacle, in the holding position. In a cross section defined by the thickness direction and the depth direction, the flap may be connected to the receptacle only at one position (i.e. at the mounting portion). In more detail, the tip end of the flap may be displaceable with respect to the receptacle (e.g. in the holding position). Particularly, the flap may be displaceable with respect to the receptacle due to material properties (i.e. elasticity of the flap). That is, the flap may be connected to the receptacle via the mounting portion, whereas the receptacle is mounted to the main body (e.g. by gluing or welding). Accordingly, the flap and the receptacle may be made of the same material. Preferably, the receptacle is formed as a frame so as to run substantially parallel to the edges of the main body in its marginal region. The flaps may be provided at the receptacle in regular or irregular intervals.

Alternatively, the receptacle may be a recess formed in the main body. That is, the flap may be at least partly accommodated within the recess of the main body so as to provide a flush surface of the main body (i.e. the first surface). In this case, the thickness of the top cover may be reduced so as reduce the space necessary for the top cover.

Preferably, a hinge is provided at the mounting portion of the flap so as to connect the main body and the flap.

As outlined above, the hinge may provide a connection between the mounting portion of the flap and the main body. The hinge may be a film hinge, for example. In this case the configuration of the flap may be further facilitated and the durability of the top cover may be increased. Preferably, a soft hinge may be provided. Accordingly, a smooth and fast transformation between the retracted position and the holding position and vice versa is possible.

Preferably, the hinge has an integrated stop so as to limit the slewing range of the flap.

The stop may be a mechanical stop that may be provided at the main body and/or at the flap. The mechanical stop may hinder the flap from being moved or displaced so as to from an angle that is larger than 90° between the main extension direction of the flap and the main body. Accordingly, the slewing range (i.e. the range in which the flap may be moved) of the flap may be limited. This provides the effect that the top cover may be easily transformed from the holding position to the retracted position by being placed on a plane (e.g. by being stacked onto other top covers). This is only possible if the main extension of the flap defines an angle with the main body that is smaller than 90°. On the other hand, if the angle is bigger than 90°, the flap may be folded away from the center of the main body i.e. outwardly. This may result in a defect of the top cover and/or in an additional manual process so as to transform the top cover to the retracted position. Therefore, in case a hinge is provided that potentially allows the tip end to be moved so as to provide a bigger angle, a stop has to be provided that prevents such position of the flap. Accordingly, the reliability of operation of the top cover may be secured.

Alternatively, if the hinge is formed by providing the flap with specific material properties and/or geometrical formations (refer to the above outlined), the stop may be realized by other means. For example, the material and/or the material thickness of the flap (i.e. the part of the flap that is bendable) may be defined such that an extension of the main extension direction beyond the above defined range may not possible due to the elastic limit of the material of the flap. In case there is provided a material thinning, the geometrical formation of the thinning may be shaped such that it is not possible to displace the tip end of the flap such that the main extension direction is inclined beyond 90° with respect to the main body.

Preferably, the flap is made of a flexible material, preferably Polypropylene, Polyethylene or a Thermoplastic elastomer.

Further, the flap may be made of the same material as the main body (refer to the above outlined). Accordingly, the manufacturing may further facilitate and manufacturing costs may be reduced. In addition, it was found that it is advantageously to provide the material properties of the main body, also for the flap. In this case the flap exhibits a cushioning property so as to protect the articles.

Preferably, the flap comprises a plurality of protrusions provided at the tip end of the flap protruding from the tip end.

The protrusions may be formed as fingers extending from the tip end of the flap. During the intended use of the top cover, the protrusions may be in contact with the articles. In particular, the protrusions may be more easily deformable as compared to the flap due to their smaller cross sections. In other words, the protrusions may have an increased elasticity as compared to the flap. Thus, the protrusions may be adapted and/or aligned to the outer shape of the articles so as to increase the contact area between the flap and the articles. Hence, the articles may be held in place more securely. The protrusions may be made of the same material as the flap. Accordingly, the protrusions may be easily manufactured, for example, by being cut out of the flap. Therefore, production costs may be reduced. There may be provided a plurality of protrusions. The protrusions may be evenly distributed along the tip end of the flap in the width direction or the depth direction (depending on the orientation of the flap). Further, in the holding position of the top cover, the protrusions may be also positioned between adjacent articles. As a result, the protection of the articles may be improved, because the protrusions (e.g. fingers) positioned between adjacent articles prevent the articles from moving. In addition, each protrusion may have a protrusion tip which has an increased cross section as compared to the mean cross section of the protrusion. Accordingly, the protrusions may at least partly surround the articles in order to more securely hold the articles in place.

Preferably, the flap is a separate member so as to be demountable from the main body.

That is the flap and the main body may be manufactured separately and may attached to each other afterwards. That is, the main body may be a layer pad used as an intermediate sheet between layers of articles. This facilitates the provisioning of top covers because the layer pads are available in a standardized shape and by adding the flap to the layer pad a top cover may be generated. Therefore, a needed number of top covers may be easily obtained by modifying available layer pads.

Preferably, the main body has a substantially rectangular shape, and wherein at at least two edges of the main body at least one flap is arranged, respectively.

As mentioned above, the main body may have a standardized size. The flaps may be provided such that they surround articles covered by the top cover at least partly. The flaps may be provided at two opposite edges so as to hold the articles in one direction (i.e. the width direction or the depth direction). In case one or more flaps are provided at each of the four edges of the main body, the flaps may hold the articles in two directions (i.e. the width direction and the depth direction). In the latter case, the flaps may at least partly surround the layer of articles.

Preferably, at least two flaps are arranged at two adjacent edges of the main body, respectively, and wherein the flaps are formed so as to not overlap with each other at the corner between the two edges in the retracted position.

As outlined above, the flap may have a shape like a frustum of a cone (seen in a plan view toward the first surface, in the retracted position). That is, the edges of the flap closest to the corners of the main body, may be oriented so as to be directed towards the center of the main body, seen in the plan view in the retracted position. Accordingly, two flaps being disposed on either side of the corner of the main body, do not overlap with one another. In case a plurality of flaps is provided at one edge of the main body, only the outermost flaps may have an outer edge oriented as described above. Alternatively, the flaps may have a rectangular shape. Accordingly, one flap may extend along one edge of the main body and the adjacent flaps provided at the adjacent edges of the main body may be shorter as the edge at which they are provided such that the flaps do not overlap with one another in the retracted position.

Preferably the top cover further comprises a brush member provided at the main body at an inward side of the flap.

The brush element may comprise a plurality of protrusions or fingers projecting from the brush element. The inward side may be the side of the flap that is closer to the center of the main body. The brush element may be attached to the main body such that the protrusions extend in the thickness direction away from the main body. Alternatively, the protrusions may be directly provided on the main body (e.g. at the first surface thereof). The protrusions of the brush element may be in contact with the articles, in the intended use of the top cover, and may thus increase the frictional connection between the main body and the articles. The brush element may be provided over almost the whole main body. Accordingly, every article of the layer of articles may be in contact with the protrusions and thus be held in place. Alternatively, the brush element may be provided in a frame-like manner closer to the center of the main body as compared to the flap. In this case, the outer row of articles of the layer of articles may be properly held by the brush element and the flap. Consequently, a top cover may be provided that may held the articles in place, even if the stack of articles is shaken.

Preferably, the at least one flap includes an additional weight at its tip end.

The additional weight may be a thickening of the flap near to or at the tip end of the flap. That is, due to the thickening, the weight at the tip end of the flap may be increased. Accordingly, the transfer between the retracted position and the holding position may be accelerated. Further, the thickening may provide additional cushioning for the articles, in the holding position. Alternatively, another element may be added to the flap so as to increase the weight. The additional element may be positioned between the mounting portion and the tip end. For example, a rod like element made of metal may be provided so as to provide an additional weight. Preferably, the rod like element may be covered by a coating so as to protect the articles from being damaged. The rod like element may be arranged such that it extends essentially parallel to the edge of the main body at which the flap is provided.

According to a further aspect of the present invention a package system is provided, comprising:
at least one layer of articles forming a load, and
the above-described top cover covering the layer of articles.

Accordingly, a stack of layers of articles may be provided which may be covered by the above-described top cover. Between each layer of articles, one layer pad may be provided.

Individual features of the above defined embodiments may be rearranged or exchanged with other features so as to form new embodiments. All advantages and modification of said features are analogously applicable to the new embodiments.

In the following the present invention will be explained in detail with reference to the enclosed figures. However, the detailed explanation of embodiments is provided for better understanding and is not intended to limit the scope of the present invention to the embodiments described in the following.
- **Fig. 1**: is a schematical view of a top cover according to an embodiment of the present invention, as seen from below.
- **Fig. 2**: is a schematical and sectional view of the top cover, according to the embodiment of the present invention.
- **Fig. 3**: is a sectional view of a top cover, according to the embodiment of the present invention along the line A-A of Fig. 1.
- **Fig. 4**: is a perspective view of a top cover according to a further embodiment of the present invention.
- **Fig. 5**: is a schematical, perspective and sectional view of the top cover according to an embodiment of the present invention.
- **Fig. 6**: is a perspective view of a top cover according to an embodiment of the present invention.
- **Fig. 7**: is a perspective view of the top cover according to the embodiment shown in Fig. 6.
- **Fig. 8**: is a perspective view of a top cover, according to a further embodiment of the present invention.
- **Fig. 9**: is a perspective view of the top cover of Fig. 8.

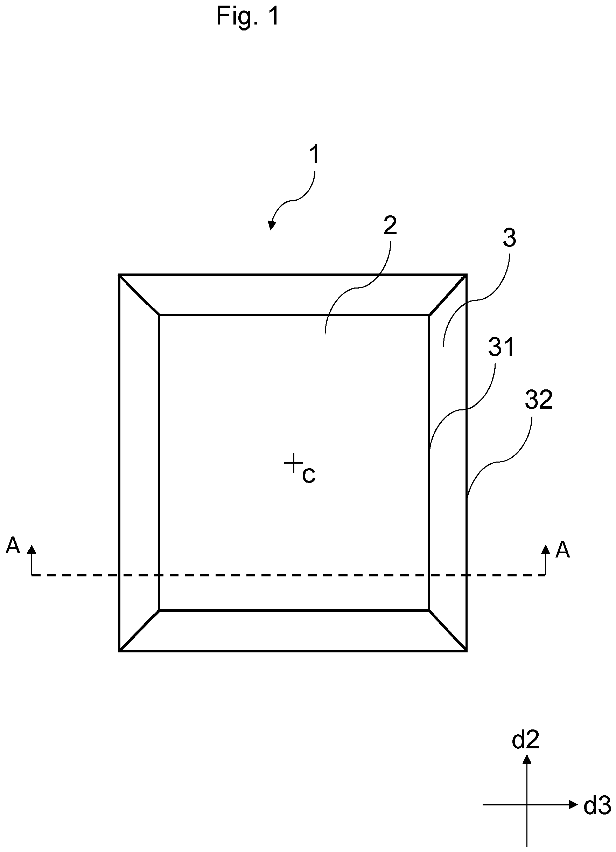

**Fig. 1** is a schematic down-view of a top cover 1 according to an embodiment of the present invention. The top cover 1 includes a main body 2 and flaps 3. In the present embodiment, the main body 2 has a rectangular shape having two longer edges extending in the width direction d2 and two shorter edges extending in the depth direction d3. Further, the main body 2 has a central point c which is the barycenter of the main body 2. Further, in the present embodiment, four flaps 3 are provided. That is, at each edge of the main body 2 a flap 3 is provided. In Fig. 1, the top cover 1 is in the retracted position, such that the flaps 3 are retracted and positioned near to the main body 2. That is, tip ends 31 of the flaps 3 are directly in contact with the main body 2. In more detail, each flap 3 has a mounting portion 32 and the tip end 31. Further, each flap 3 is attached to the main body 2 via the mounting portion 32. The tip end 31 of the flap 3 is positioned at the opposite end of the flap 3. As described above, in the retracted position, the tip end 31 of the flap 3 is positioned near to the main body. On the other hand, in the holding position, the tip end 31 is displaced so as to be spaced apart from the main body 2 (further details will follow below). In addition, the flaps 3 are configured such that two adjacent flaps 3 do not overlap with each other in the retracted position. As shown in Fig. 1, each flap 3 has a form of a substantially frustum of a cone. That is, the length of the flap 3 at the tip end 31 in the width direction d2 or in the depth direction d3 is longer than the length of the flap 3 at the mounting portion 32 in the depth direction d3 or the width direction d2. Accordingly, the flaps 3 do not overlap with one another if the top cover 1 is in the retracted position.

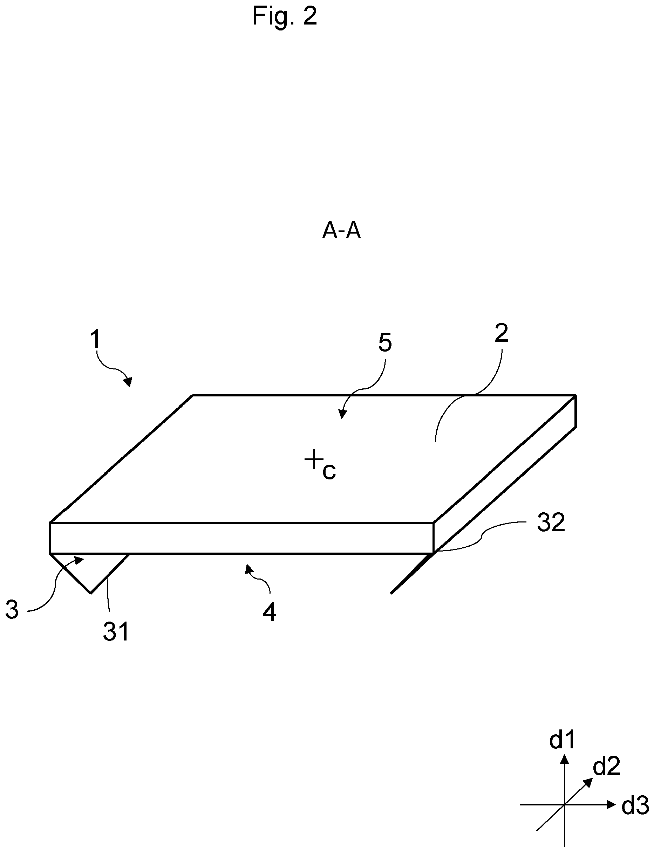

**Fig. 2** shows a schematical, perspective and sectional view along the line A-A of Fig. 1. Further, in Fig. 2, the top cover 1 is positioned in the holding position. That is, the tip end 31 of the flap 3 is displaced so as to be spaced apart from the main body 2 of the top cover 1. In more detail, the flap 3 has a main extension which extends through the mounting portion 32 at which the flap 3 is attached to the main body 2 and the tip end 31 which represents the outer end of the flap 3. Said main extension is inclined with respect to the main body 2 by 75° at most. That is, the flaps 3 are inclined towards the central point c of the main body 2. Moreover, the main body 2 has a first surface 4 and a second surface 5. A thickness direction d1 extends from the first surface through the second surface 5.

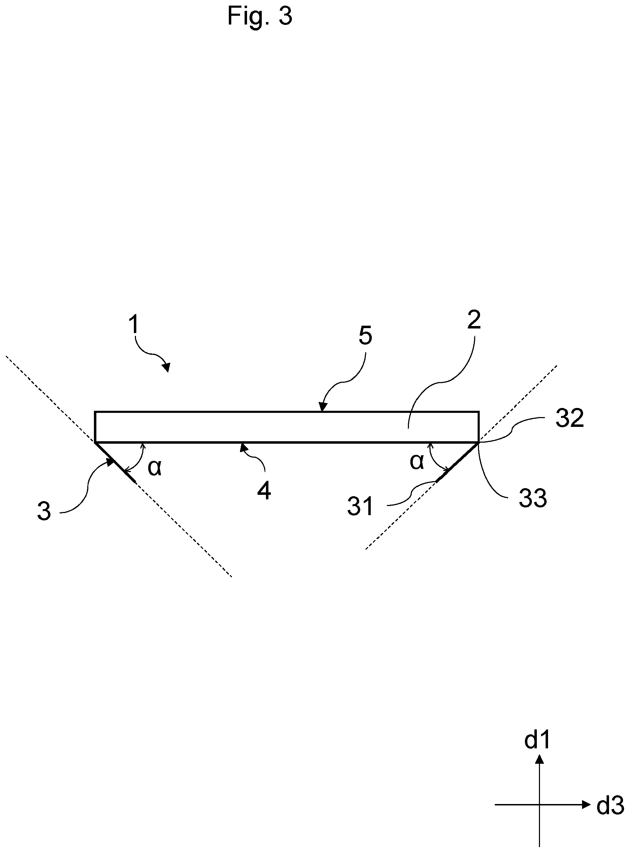

**Fig. 3** is a schematical and sectional view showing the top cover of Fig. 2 along the line A-A of Fig. 1. In Fig. 3, the flaps 3 are inclined by the same angle α. In particular, the main extension directions (see the dotted lines in Fig. 3) are inclined by the angle α, respectively. In the present embodiment, the main extension direction extends along the flap 3. Further, in the present embodiment, the flaps 3 are directly mounted to the main body 2. The inclination of the flaps 3 is provided by a film hinge 33, which is provided at the mounting portion 32. Further, the film hinge 33 has a mechanical stop, which prevents the flap 3 from being inclined more than 75° with respect to the main body 2 of the top cover 1.

In another embodiment, the mechanical stop prevents the flaps from being inclined by more than 72° with respect to the main body 2.

The top cover 1 shown in Fig. 1 (that is, in the retracted position) is transformed to the holding position as shown in Figures 2 and 3 by lifting up the top cover 1 (for example using a suction device). Then, the tip ends 31 of the flaps are displaced downwards by gravity such that the top cover 1 is in the holding position. In case the top cover 1 is to be transformed from the holding position to the retracted position, the top cover 1 may be placed on an essentially flat plane such that the flaps 3 are pushed towards the main body 2. Accordingly, the tip ends 31 of the flaps 3 is brought in direct contact with the main body 2.

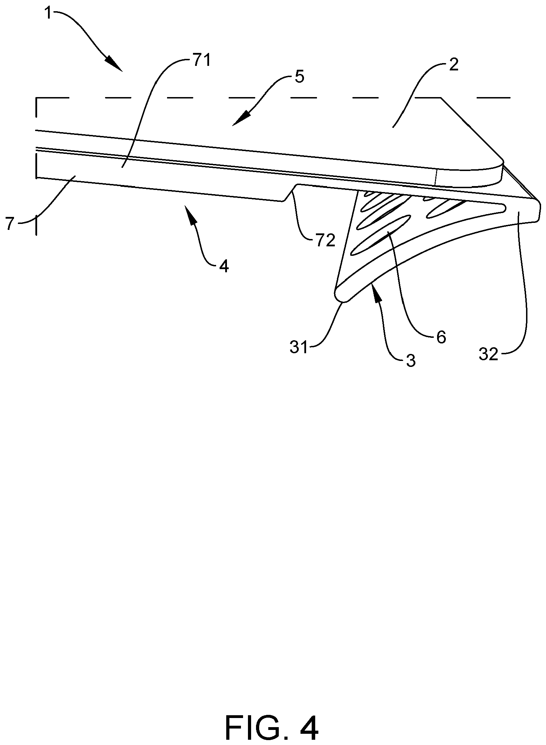

**Fig. 4** is a perspective view of a further embodiment of the present invention. The top cover 1 depicted in Fig. 4 differs from the top cover 1 described above in that a receptacle 7 is provided. In more detail, in the present embodiment, the receptacle 7 and the flap 3 form an integrated member. In other words, the receptacle 7 and the flap 3 are formed as a one-piece part. The receptacle 7 has a receptacle body 71, which has a recess portion 72. In the retracted position, the flap 3 may be accommodated within the recessed portion 72. As a result, the receptacle body 71 and the flap 3 form a flush surface. In other words, in the retracted position, a substantially flat surface at the first surface 4 of the main body 2 can be provided. Consequently, the top cover 1 can be easily stacked onto other top covers. It is to be noted that the top cover 1 in Fig. 4 is in the holding position. In the present embodiment, the mounting portion 32 of the flap 3 is the connection between the flap 3 and the receptacle body 71. The receptacle 7 may be attached to the first surface 4 of the main body 2 by gluing or by welding.

In addition, the flap 3 of the present embodiment includes a plurality of through-holes 6. The through holes 6 are equidistantly distributed over the flap 3. Further, the through holes 6 are arranged in two rows each being parallel to the edge of the main body 2 at which the flap 3 is arranged. Accordingly, water used during a washing process of the top cover 1 may be easily discharged and the weight of the flap 3 may be reduced.

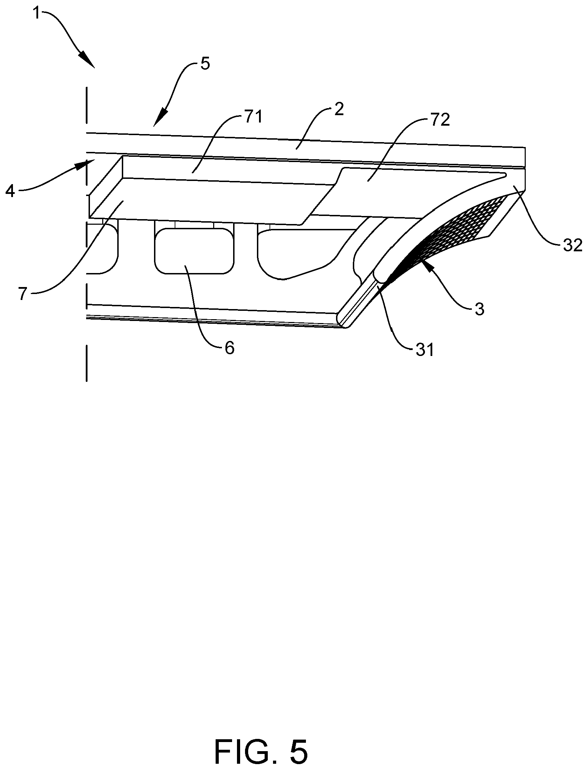

**Fig. 5** is a perspective and sectional view of the top cover 1 shown in Fig. 4. In Fig. 5, the top cover 1 is depicted as seen from slightly below. Further, in Fig. 5, a corner between two edges of the main body 2 is depicted. As in the before-described embodiment, in the present embodiment, the flaps 3 are configured such that the flaps 3 do not overlap with one another in the retracted position. In the embodiment depicted in Fig. 5, there is a gap between the adjacent flaps 3 each being designated to a separate edge of the main body 2, so as to not overlap with one another, if the top cover 1 is in the retracted position. Further, in the present embodiment, the through holes 6 are provided only in one row along the extension of the flap 3.

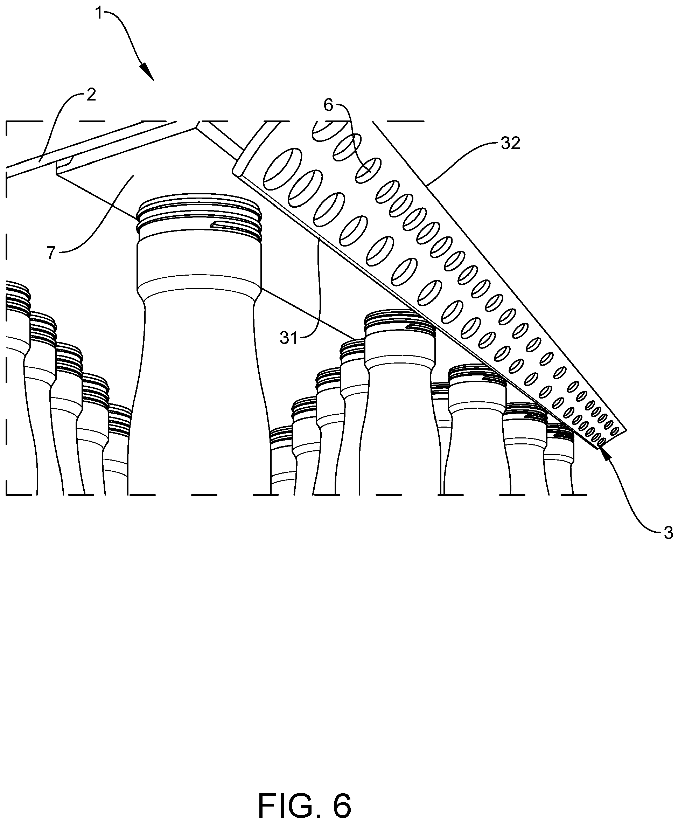

**Fig. 6** is a perspective view of the top cover 1 in an intended use. That is, the top cover 1 is placed on a layer of articles which are palatalized. As can be seen in Fig. 6, the top cover 1 is in the holding position. That is, the flaps 3 are inclined downwards with respect to the main body 2. In the present case, the articles are bottles, which can be held in place by being in contact with the tip end 31 of the flap. Further, the bottles positioned at the outer edge of the pallet are in contact with the receptacle 7. The other bottles of the layer are in contact with the main body 2.

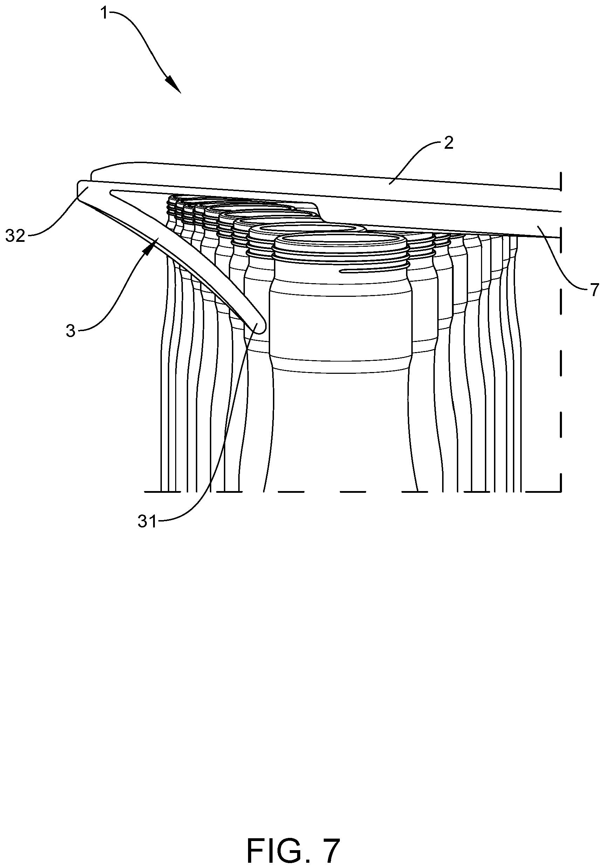

**Fig. 7** is a perspective view of the embodiment depicted in Fig. 6. In Fig. 7, it is depicted that the bottles (i.e. the articles) are in contact with the flap 3 only at a position near to an upper end of the bottles. However, this contact ensures a stabilizing of the layer of articles and prevents that a bottle tilt out of the layer.

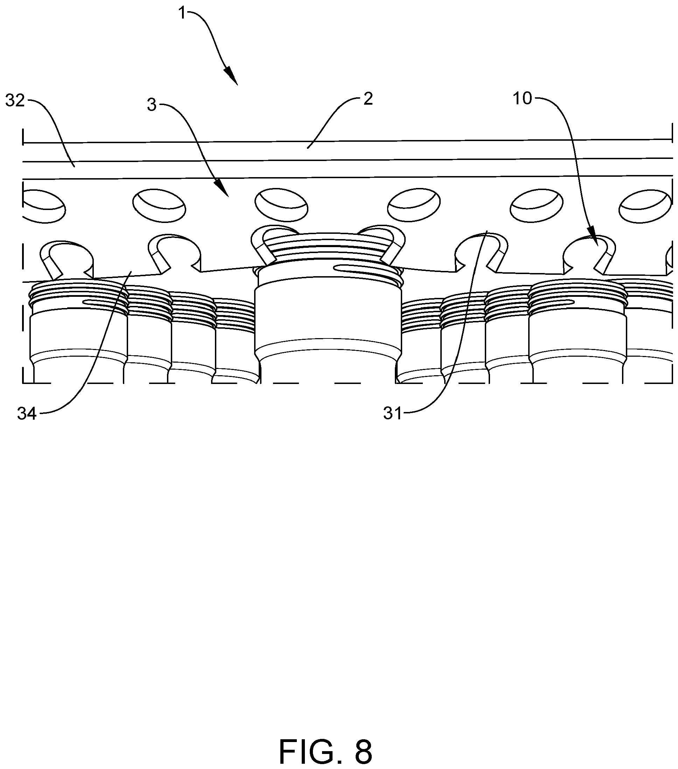

In **Fig. 8****,** a perspective and schematical view of a top cover 1 according to a further embodiment of the present invention is depicted. The present embodiment corresponds essentially to the embodiment depicted in Figures 6 and 7 with the difference that protrusions 34 are provided at the tip end 31 of the flap 3. The protrusions 34 are extending from the tip end 31 towards the articles to be transported. In more detail, some of the protrusions 34 may be inserted into an opening of the articles. For example, in Fig. 8, it is depicted that a protrusion 34 of the flap 3 is partly inserted into an opening of a bottle. Accordingly, the bottle may be appropriately held by the flap 3. In addition, in the embodiment depicted in the Fig. 8, there is an additional brush element 10 provided at the main body 2 (in the background). The brush element 10 is provided at an inward side of the flap 3. The brush element 10 has a priority of fingers or protrusions 11 extending from the first surface 4 in the thickness direction d1. The fingers 11 of the brush element 10 are in contact with the articles so as to hold them by frictional contact in place. That is, in the present embodiment, the articles are held by both the flap 3 and the brush element 10.

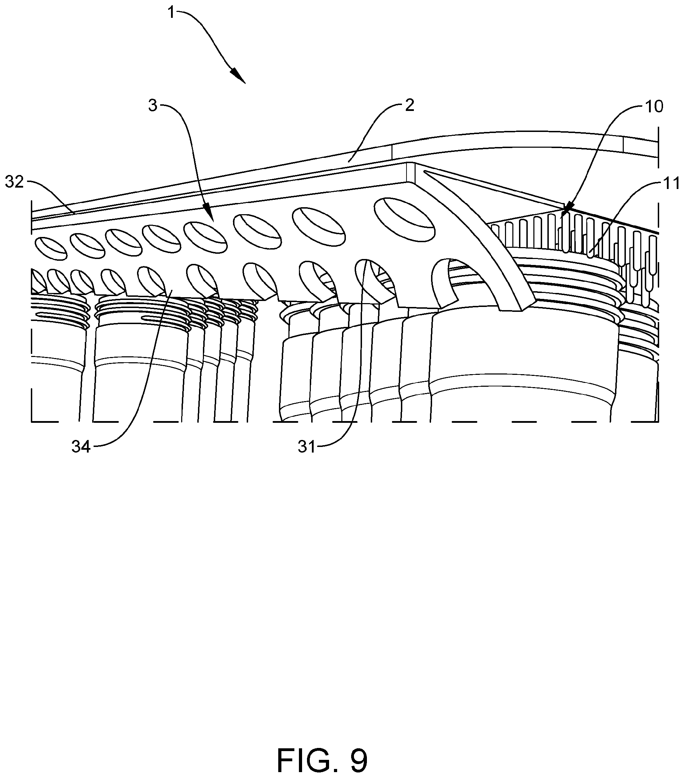

**Fig. 9** is a perspective schematic view of the embodiment depicted in Fig. 8. In Fig. 9, the brush element 10 depicted, too. Especially, some of the fingers 11 are inserted into the bottles, some are bend or deviated by the bottles and some are aligned at an outside of the bottles, so as to provide a good frictional contact between the main body 2 and the bottles (i.e. the articles). In the present embodiment, the brush element 10 is provided in a frame-like shape, parallel to the flaps 3, so as to cover the first and second row of articles. In addition, in Fig. 9, it is visible that the protrusions 34 of the flaps 3 are not inserted into the openings of the bottles. However, since the protrusions 34 of the flaps 3 have an increased flexibility with respect to the flap 3, they can be individually aligned to the articles to be held. Therefore, the articles may be securely held by the top cover 1. In a further embodiment, the receptacle body 71 may be formed as the brush element 10.

### Reference signs:

- 1: Top cover
- 2: main body
- 3: flap
- 31: tip end
- 32: mounting portion
- 33: film hinge
- 34: protrusion
- 4: first surface
- 5: second surface
- 6: through-holes
- 7: receptacle
- 71: receptacle body
- 72: recess portion
- 10: brush element
- 11: fingers
- d1: thickness direction
- d2: width direction
- d3: depth direction
- α: angle between main extension direction and main body

## Claims

1. A top cover (1) for covering a layer of articles, preferably a palletized layer of articles, comprising:
a main body (2) having a substantially plate-like shape,
at least one flap (3) arranged at the main body (2),
wherein the at least one flap (3) is provided at a marginal region of the main body (2),
wherein the flap (3) has a tip end (31) and a mounting portion (32),
wherein the flap is connected to the main body via the mounting portion (32),
wherein the tip end (31) is displaceable with respect to the main body (2) between a holding position and a retracted position,
wherein, in the holding position, the tip end (31) of the flap (3) is spaced apart from the main body (2), and
**characterized in that**, in the holding position, a main extension direction of the flap (3) is inclined towards a center (c) of the main body (2) by an angle (α) smaller than 90° so as to securely hold the articles by the flap, wherein the flap (3) may be only elastically deviated or deformed such that the flap (3) automatically returns to a position in which the angle between the main extension direction and the main body (2) is smaller than 90° once the top cover (1) is removed from the layer of articles.

2. Top cover (1) according to claim 1, wherein the flap (3) is configured such that the tip end (31) is displaceable between the retracted position and the holding position by gravity.

3. Top cover (1) according to claim 1 or 2, wherein the flap (3) is configured such that an angle between the main extension direction and the main body (2) in the holding position is smaller than 80°, preferably, smaller than 75°.

4. Top cover (1) according to any one of preceding claims, wherein a plurality of holes (6) is provided in the flap.

5. Top cover (1) according to any one of preceding claims, further comprising a receptacle (7) so as to accommodate the flap (3) in the retracted position.

6. Top cover (1) according to any one of preceding claims, wherein a hinge (33) is provided at the mounting portion (32) of the flap (3) so as to connect the main body (2) and the flap (3).

7. Top cover (1) according to claim 6, wherein the hinge (33) has an integrated stop so as to limit the slewing range of the flap (3).

8. Top cover (1) according to any one of preceding claims, wherein the flap (3) is made of a flexible material, preferably Polypropylene, Polyethylene or a Thermoplastic elastomer.

9. Top cover (1) according to any one of preceding claims, wherein the flap (3) comprises a plurality of protrusions (34) provided at the tip end (31) of the flap (3) protruding from the tip end (31).

10. Top cover (1) according to any one of preceding claims, wherein the flap (3) is a separate member so as to be demountable from the main body (2).

11. Top cover (1) according to any one of preceding claims, wherein the main body (2) has a substantially rectangular shape, and wherein at at least two edges of the main body (2) at least one flap (3) is arranged, respectively.

12. Top cover (1) according to claim 11, wherein at least two flaps (3) are arranged at two adjacent edges of the main body (2), respectively, and wherein the flaps (3) are formed so as to not overlap with each other at the corner between the two edges in the retracted position.

13. Top cover (1) according to any one of preceding claims, further comprising a brush member (10) provided at the main body (2) at an inward side of the flap (3).

14. Top cover (1) according to any one of preceding claims, wherein the at least one flap (3) includes an additional weight at its tip end.

15. Package system comprising:
at least one layer of articles forming a load, and
the top cover (1) according to any one of the preceding claims, covering the layer of articles.

## Patentansprüche

1. Obere Abdeckung (1) zum Abdecken einer Lage von Gegenständen, vorzugsweise einer palettierten Lage von Gegenständen, umfassend:
einen Hauptkörper (2) mit einer im Wesentlichen plattenartigen Form,
mindestens eine am Hauptkörper (2) angeordnete Klappe (3),
wobei die mindestens eine Klappe (3) an einem Randbereich des Hauptkörpers (2) vorgesehen ist,
wobei die Klappe (3) ein Spitzenende (31) und einen Befestigungsabschnitt (32) aufweist,
wobei die Klappe über den Befestigungsabschnitt (32) mit dem Hauptkörper verbunden ist,
wobei das Spitzenende (31) in Bezug auf den Hauptkörper (2) zwischen einer Halteposition und einer eingezogenen Position verschiebbar ist,
wobei in der Halteposition das Spitzenende (31) der Klappe (3) von dem Hauptkörper (2) beabstandet ist, und
**dadurch gekennzeichnet, dass** in der Halteposition eine Haupterstreckungsrichtung der Klappe (3) zu einer Mitte (c) des Hauptkörpers (2) um einen Winkel (α) kleiner als 90° geneigt ist, um die Gegenstände durch die Klappe sicher zu halten, wobei die Klappe (3) nur elastisch abgelenkt oder verformt werden kann, so dass die Klappe (3) automatisch in eine Position zurücckehrt, in der der Winkel zwischen der Haupterstreckungsrichtung und dem Hauptkörper (2) kleiner als 90° ist, sobald die obere Abdeckung (1) von der Lage der Gegenstände entfernt wird.

2. Obere Abdeckung (1) nach Anspruch 1, wobei die Klappe (3) so gestaltet ist, dass das Spitzenende (31) durch Schwerkraft zwischen der eingezogenen Position und der Halteposition verschiebbar ist.

3. Obere Abdeckung (1) nach Anspruch 1 oder 2, wobei die Klappe (3) so gestaltet ist, dass ein Winkel zwischen der Haupterstreckungsrichtung und dem Hauptkörper (2) in der Halteposition kleiner als 80°, vorzugsweise kleiner als 75° ist.

4. Obere Abdeckung (1) nach einem der vorhergehenden Ansprüche, wobei in der Klappe eine Vielzahl von Löchern (6) vorgesehen ist.

5. Obere Abdeckung (1) nach einem der vorhergehenden Ansprüche, die außerdem eine Aufnahme (7) umfasst, um die Klappe (3) in der eingezogenen Position aufzunehmen.

6. Obere Abdeckung (1) nach einem der vorhergehenden Ansprüche, wobei ein Scharnier (33) an dem Befestigungsabschnitt (32) der Klappe (3) vorgesehen ist, um den Hauptkörper (2) und die Klappe (3) zu verbinden.

7. Obere Abdeckung (1) nach Anspruch 6, wobei das Scharnier (33) einen integrierten Anschlag aufweist, um den Schwenkbereich der Klappe (3) zu begrenzen.

8. Obere Abdeckung (1) nach einem der vorhergehenden Ansprüche, wobei die Klappe (3) aus einem flexiblen Material, vorzugsweise Polypropylen, Polyethylen oder einem thermoplastischen Elastomer, hergestellt ist.

9. Obere Abdeckung (1) nach einem der vorhergehenden Ansprüche, wobei die Klappe (3) eine Vielzahl von Vorsprüngen (34) aufweist, die an dem Spitzenende (31) der Klappe (3) vorgesehen sind und von dem Spitzenende (31) vorstehen.

10. Obere Abdeckung (1) nach einem der vorhergehenden Ansprüche, wobei die Klappe (3) ein separates Element ist, so dass sie vom Hauptkörper (2) abnehmbar ist.

11. Obere Abdeckung (1) nach einem der vorhergehenden Ansprüche, wobei der Hauptkörper (2) eine im Wesentlichen rechteckige Form aufweist und wobei an mindestens zwei Kanten des Hauptkörpers (2) jeweils mindestens eine Klappe (3) angeordnet ist.

12. Obere Abdeckung (1) nach Anspruch 11, wobei mindestens zwei Klappen (3) jeweils an zwei benachbarten Kanten des Hauptkörpers (2) angeordnet sind und wobei die Klappen (3) so geformt sind, dass sie sich an der Ecke zwischen den beiden Kanten in der eingezogenen Position nicht überlappen.

13. Obere Abdeckung (1) nach einem der vorhergehenden Ansprüche, ferner umfassend ein Bürstenelement (10), das an dem Hauptkörper (2) an einer Innenseite der Klappe (3) vorgesehen ist.

14. Obere Abdeckung (1) nach einem der vorhergehenden Ansprüche, wobei die mindestens eine Klappe (3) an ihrem Spitzenende ein zusätzliches Gewicht aufweist.

15. Paketsystem umfassend:
mindestens eine Lage von Gegenständen, die eine Ladung bilden, und
die obere Abdeckung (1) nach einem der vorhergehenden Ansprüche, die die Lage der Gegenstände abdeckt.

## Revendications

1. Couvercle supérieur (1) pour couvrir une couche d'articles, de préférence une couche d'articles palettisée, comprenant :
un corps principal (2) se présentant sensiblement en forme de plaque,
au moins un rabat (3) disposé sur le corps principal (2),
dans lequel
ledit au moins un rabat (3) est prévu dans une zone marginale du corps principal (2),
le rabat (3) présente une extrémité de bord (31) et une partie de montage (32),
le rabat est relié au corps principal par l'intermédiaire de la partie de montage (32),
l'extrémité de bord (31) peut être déplacée par rapport au corps principal (2) entre une position de maintien et une position rétractée,
dans la position de maintien, l'extrémité de bord (31) du rabat (3) est écartée du corps principal (2),
**caractérisé en ce que**
dans la position de maintien, une direction d'extension principale du rabat (3) est inclinée vers un centre (c) du corps principal (2) d'un angle (α) inférieur à 90°, de telle sorte que les articles sont maintenus fermement par le rabat, le rabat (3) pouvant être dévié ou déformé seulement élastiquement de manière à ce que le rabat (3) revienne automatiquement à une position dans laquelle l'angle entre la direction d'extension principale et le corps principal (2) est inférieur à 90°, une fois que le couvercle supérieur (1) est enlevé de la couche d'articles.

2. Couvercle supérieur (1) selon la revendication 1,
dans lequel le rabat (3) est configuré de telle sorte que l'extrémité de bord (31) peut être déplacée par gravité entre la position rétractée et la position de maintien.

3. Couvercle supérieur (1) selon la revendication 1 ou 2,
dans lequel le rabat (3) est configuré de telle sorte qu'un angle entre la direction d'extension principale et le corps principal (2) dans la position de maintien est inférieur à 80°, de préférence inférieur à 75°.

4. Couvercle supérieur (1) selon l'une des revendications précédentes,
dans lequel une pluralité de trous (6) est prévue dans le rabat.

5. Couvercle supérieur (1) selon l'une des revendications précédentes,
comprenant en outre un compartiment (7) destiné à recevoir le rabat (3) dans la position rétractée.

6. Couvercle supérieur (1) selon l'une des revendications précédentes,
dans lequel une charnière (33) est prévue au niveau de la partie de montage (32) du rabat (3) afin de relier le corps principal (2) et le rabat (3).

7. Couvercle supérieur (1) selon la revendication 6,
dans lequel la charnière (33) comprend une butée intégrée afin de limiter la plage de pivotement du rabat (3).

8. Couvercle supérieur (1) selon l'une des revendications précédentes,
dans lequel le rabat (3) est réalisé en matériau souple, de préférence en polypropylène, en polyéthylène ou en élastomère thermoplastique.

9. Couvercle supérieur (1) selon l'une des revendications précédentes,
dans lequel le rabat (3) comprend une pluralité de protubérances (34) prévues à l'extrémité de bord (31) du rabat (3), qui font saillie à partir de l'extrémité de bord (31).

10. Couvercle supérieur (1) selon l'une des revendications précédentes,
dans lequel le rabat (3) est un élément séparé de manière à être démontable du corps principal (2).

11. Couvercle supérieur (1) selon l'une des revendications précédentes,
dans lequel le corps principal (2) présente une forme sensiblement rectangulaire, et
au moins un rabat (3) respectif est disposé sur au moins deux bords du corps principal (2).

12. Couvercle supérieur (1) selon la revendication 11,
dans lequel au moins deux rabats (3) sont disposés sur deux bords adjacents du corps principal (2), respectivement, et
les rabats (3) sont formés de manière à ne pas se chevaucher dans le coin entre les deux bords, dans la position rétractée.

13. Couvercle supérieur (1) selon l'une des revendications précédentes,
comprenant en outre un élément formant brosse (10) prévu sur le corps principal (2) au niveau d'une face intérieure du rabat (3).

14. Couvercle supérieur (1) selon l'une des revendications précédentes,
dans lequel ledit au moins un rabat (3) comprend un poids supplémentaire à son extrémité de bord.

15. Système d'emballage comprenant
au moins une couche d'articles formant une charge, et
le couvercle supérieur (1) selon l'une des revendications précédentes, recouvrant la couche d'articles.
